(19) Europäisches Patentamt
European Patent Office
Office européen des brevets

(11) **EP 2 525 456 B1**

(12) **EUROPÄISCHE PATENTSCHRIFT**

(45) Veröffentlichungstag und Bekanntmachung des Hinweises auf die Patenterteilung:
**27.03.2019 Patentblatt 2019/13**

(51) Int Cl.:
***H02B 13/025*** *(2006.01)*

(21) Anmeldenummer: **12167761.1**

(22) Anmeldetag: **11.05.2012**

(54) **Absorbereinrichtung für Schaltanlage**

Absorber device for switchgear

Dispositif d'absorbeur pour installation de commutation

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **18.05.2011 DE 102011076040**

(43) Veröffentlichungstag der Anmeldung:
**21.11.2012 Patentblatt 2012/47**

(73) Patentinhaber: **Schneider Electric Sachsenwerk GmbH**
**93055 Regensburg (DE)**

(72) Erfinder: **El Ouadhane, Harethe**
**93053 Rgensburg (DE)**

(74) Vertreter: **DREISS Patentanwälte PartG mbB**
**Friedrichstraße 6**
**70174 Stuttgart (DE)**

(56) Entgegenhaltungen:
**EP-A1- 1 450 458      DE-A1- 2 817 418**
**DE-C1- 19 645 304      DE-U- 7 325 849**
**DE-U1- 29 611 396**

## Beschreibung

### Stand der Technik

Die Erfindung betrifft eine Absorbereinrichtung, für ein Schaltfeld einer Mittelspannungsschaltanlage.

Absorbereinrichtungen der vorstehend genannten Art werden beispielsweise bei Mittelspannungsschaltanlagen verwendet, um bei dem Auftreten eines Lichtbogens in der Schaltanlage (z.B. im fehlerhaften Kabelanschlussraum eines bestimmten Schaltfeldes der Anlage), die notwendige Druckentlastung des betroffenen Gehäuses der Schaltanlage und gleichzeitig eine auseichende Kühlung der aufgrund des Lichtbogens erhitzten Gase zu bewirken.

EP 1 450 458 A1 beschreibt eine Baueinheit für die Aufnahme mindestens eines Elements für die Absorption oder Dämpfung austretender heißer Gase verursacht durch einen Lichtbogen in elektrischen Funktionseinheiten der Hoch- und Mittelspannung, insbesondere in Schaltanlagen der Hoch- oder Mittelspannung.

Bei den herkömmlichen Absorbereinrichtungen ist eine hinreichende Wirksamkeit jedoch ohne zusätzliche aufwendige Konstruktive Maßnahmen (Sammelkanäle) nur für verhältnismäßig geringe Lichtbogenströme bzw. -leistungen gewährleistet.

Für die höheren Lichtbogenströme bzw. -leistungen können Sammelkanäle verwendet werden. Die bekannten Absorbereinrichtungen werden dann im Sammelkanal an einer günstigen Stelle (weit entfernt von den Lichtbogenräumen) angebracht, um ein Bersten des fehlerhaften Gehäuses zu vermeiden.

### Offenbarung der Erfindung

Demgemäß ist es Aufgabe der vorliegenden Erfindung, eine Absorbereinrichtung der eingangs genannten Art dahingehend weiter zu entwickeln, dass eine gesteigerte Wirksamkeit auch bei größeren Lichtbogenströmen gegeben ist und gleichzeitig auf die Verwendung von Sammelkanälen verzichtet werden kann. Dies bewirkt eine Reduzierung der Konstruktions- und Montagekosten und eine Reduzierung der Baugröße der Schaltanlagen.

Diese Aufgabe wird durch die Merkmale des Anspruchs 1 gelöst.

Erfindungsgemäß ist erkannt worden, dass die Vorsehung von mehreren Absorberelementen in Serie unter gleichzeitiger Abstimmung ihrer Strömungswiderstände aufeinander zu einer gesteigerten Wirksamkeit der Absorbereinrichtung führt. Insbesondere kann auf diese Weise eine Absorbereinrichtung bereitgestellt werden, die auch bei unter Kurzschlussströmen auftretenden Störlichtbögen einen wirksamen Schutz beziehungsweise eine Verminderung von im Lichtbogenfall auftretenden Plasma- beziehungsweise Partikelstroms bewirkt.

Bei einer vorteilhaften Ausführungsform ist vorgesehen, dass alle Absorberelemente, die weiter stromabwärts angeordnet sind als ein eingangsseitig angeordnetes erstes Absorberelement, jeweils einen größeren Strömungswiderstand aufweisen als das erste Absorberelement. Dadurch wird vorteilhaft erreicht, dass die erfindungsgemäße Absorbereinrichtung eingangsseitig nicht bereits einen zu großen Strömungswiderstand aufweist, wodurch eine hinreichend gute Druckentlastung des Schaltanlagengehäuses gewährleistet ist. Gleichzeitig kann durch die weiter stromabwärts angeordneten Absorberelemente eine weitere wirksame Reduktion eines Plasma- beziehungsweise Partikelstroms erzielt werden.

Bei einer weiteren vorteilhaften Ausführungsform ist vorgesehen, dass jedes Absorberelement jeweils einen größeren Strömungswiderstand aufweist, als ein dem betreffenden Absorberelement stromaufwärts benachbart angeordnetes Absorberelement. Durch eine derartige Hintereinanderschaltung von Absorberelementen mit jeweils in Strömungsrichtung größer werdendem Strömungswiderstand ist eine besonders effiziente Druckentlastung des Anlagenraums der Schaltanlage unter gleichzeitiger Reduktion der ausströmenden heißen Gase und Partikel aus der Absorbereinrichtung gegeben.

Bei einer weiteren vorteilhaften Erfindungsvariante, bei der mindestens drei Absorberelemente vorgesehen sind, kann weiter vorgesehen sein, dass zwei zueinander benachbarte Absorberelemente jeweils einen im Wesentlichen gleich großen Strömungswiderstand aufweisen, wodurch die Anzahl an Gleichteilen innerhalb der erfindungsgemäßen Absorbereinrichtung gesteigert werden kann. Beispielsweise kann ein erstes Absorberelement einen ersten, verhältnismäßig geringen, Strömungswiderstand aufweisen, während zwei in Druckentlastungs- bzw. Strömungsrichtung benachbarte, stromabwärts gelegene Absorberelemente einen größeren zweiten Strömungswiderstand aufweisen.

Bei einer weiteren vorteilhaften Ausführungsform ist ein Druckkanal zur Aufnahme der Absorberelemente vorgesehen, der beispielsweise durch ein im Wesentlichen Zylinderform, vorzugsweise mit Rechteckquerschnitt, aufweisendes Gehäuse zur Aufnahme der Absorberelemente gebildet sein kann. Der Druckkanal definiert eine resultierende Strömungsrichtung von Lichtbogengasen durch die einzelnen Absorberelemente hindurch. Neben der Zylinderform sind auch andere Geometrien für das Gehäuse bzw. den Druckkanal möglich.

Erfindungsgemäß ist vorgesehen, dass ein Abstand zwischen zwei benachbarten Absorberelementen größer oder gleich etwa einer Quadratwurzel einer Querschnittsfläche mindestens eines der beiden benachbarten Absorberelemente ist. Dies bedeutet, dass die Länge (in Strömungsrichtung) eines Entlastungsvolumens zwischen den zwei benachbarten Absorberelementen ein bestimmtes und einfach einstellbares Mindestmaß nicht unterschreitet. Dies bewirkt, dass die im Lichtbogenfall auftretenden strömenden Gase und die Druckwelle

A) stufenweise gebremst und gekühlt werden und
B) zwischen den Absorbern durch Reflexion gedämpft werden (schleifenartige Reflektionen an beiden Absorbern und in beiden Richtungen).

Erfindungsgemäß ist erkannt worden, dass die Vorsehung von mehreren Absorberelementen in Serie unter gleichzeitiger Abstimmung ihrer Strömungswiderstände aufeinander zu einer gesteigerten Wirksamkeit der Absorbereinrichtung führt und gleichzeitig abgestimmt bzw. eingestellt werden kann auf die maximal zulässige Druckbelastung des Gehäuses (Ort, in dem der maximale Überdruck bei einem Störlichtbogen entsteht).

Abgestimmt bzw. eingestellt bedeutet, dass die Auslegung der Strömungswiderstände (Aufbau der Absorberelemente mit bestimmter effektiver Durchlassfläche, bestimmter Staufläche und bestimmter Kühlmasse) sowohl das Bersten des Fehlerraums als auch das Entstehen eines unzulässig hohen Überdrucks und Entweichen von heißen Gasen und glühenden Partikeln verhindert.

Bei einer weiteren vorteilhaften Ausführungsform ist vorgesehen, dass ein entlang der Strömungsrichtung gemessener Abstand zwischen zwei jeweils zueinander benachbarten Absorberelementen für die Mehrzahl der Absorberelemente im Wesentlichen gleich ist, wodurch sich wiederum eine Fertigung der erfindungsgemäßen Absorbereinrichtung vereinfacht.

Als eine weitere Lösung der Aufgabe der vorliegenden Erfindung ist ein Schalfeld, insbesondere für eine Mittelspannungsschaltanlage, mit mindestens einer erfindungsgemäßen Absorbereinrichtung, vorgeschlagen.

Als eine weitere Lösung der Aufgabe der vorliegenden Erfindung ist eine Schaltanlage, insbesondere eine Mittelspannungsschaltanlage, mit mindestens einer erfindungsgemäßen Absorbereinrichtung bzw. mindestens einem erfindungsgemäßen Schaltfeld, vorgeschlagen.

Bei einer weiteren vorteilhaften Ausführungsform ist vorgesehen, dass die Schaltanlage mindestens zwei Schaltfelder aufweist, wobei jedem der Schaltfelder eine eigene erfindungsgemäße Absorbereinrichtung zugeordnet ist. Demnach kann jedes einzelne Schaltfeld mit einer eigenen Absorbereinrichtung ausgestattet sein, die vorteilhaft hinsichtlich ihrer Konfiguration (Zahl, Anordnung, Ausbildung der Absorberelemente) speziell auf das betreffende Schaltfeld abgestimmt ist.

Bei einer weiteren vorteilhaften Ausführungsform der erfindungsgemäßen Schaltanlage ist vorgesehen, dass eine einem ersten Schaltfeld zugeordnete erste Absorbereinrichtung eine erste Anzahl und/oder Anordnung und/oder Konfiguration von Absorberelementen aufweist, und dass eine einem zweiten Schaltfeld zugeordnete zweite Absorbereinrichtung eine zweite Anzahl und/oder Anordnung und/oder Konfiguration von Absorberelementen aufweist, die insbesondere verschieden ist von der ersten Anzahl und/oder Anordnung und/oder Konfiguration.

Nachfolgend werden beispielhafte Ausführungsformen der Erfindung unter Bezugnahme auf die Zeichnung erläutert. In der Zeichnung zeigt:

Figur 1    schematisch eine Absorbereinrichtung gemäß einer Ausführungsform der Erfindung;

Figur 2    schematisch eine Seitenansicht eines Schaltfelds gemäß einer Ausführungsform der Erfindung im Querschnitt,

Figur 3    schematisch eine Seitenansicht eines Schaltfelds gemäß einer weiteren Ausführungsform der Erfindung in teilweisem Querschnitt,

Figur 4a, 4b    weitere Ausführungsformen von erfindungsgemäßen Absorberelementen in teilweisem Querschnitt,

Figur 5    perspektivisch eine weitere Ausführungsform von eines erfindungsgemäßen Absorberelements,

Figur 6a, 6b    weitere Ausführungsformen von erfindungsgemäßen Absorberelementen in teilweisem Querschnitt, und

Figur 7    schematisch eine Draufsicht auf eine drei Schaltfelder aufweisende Schaltanlage gemäß einer Ausführungsform.

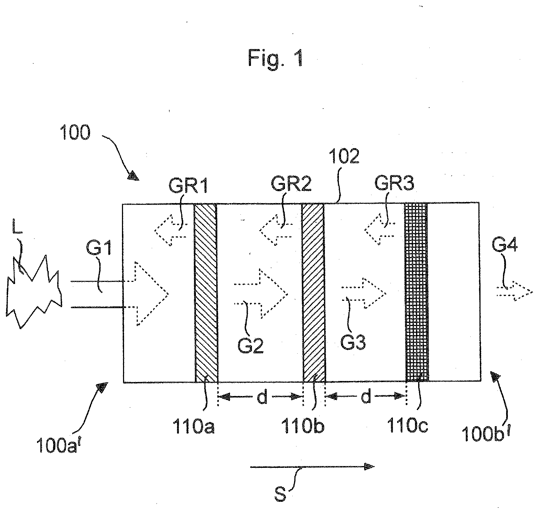

Figur 1 zeigt schematisch eine erste Ausführungsform einer erfindungsgemäßen Absorbereinrichtung 100, die dazu ausgebildet ist, z.B. infolge eines Störlichtbogens L bei elektrischen Anlagen, insbesondere bei Schaltfeldern von Mittelspannungsschaltanlagen, auftretende heiße Gase beziehungsweise Plasma sowie glühende Partikel zu reduzieren. Ferner kann die Absorbereinrichtung 100 zur Druckentlastung eines Gehäuses eines entsprechenden Schaltfelds bzw. einer Schaltanlage dienen, indem ein infolge des Lichtbogens L entstehender Überdruck in einem Gehäuse des Schaltfelds bzw. der Schaltanlage zumindest teilweise durch die Absorbereinrichtung 100 hindurch abgebaut werden kann.

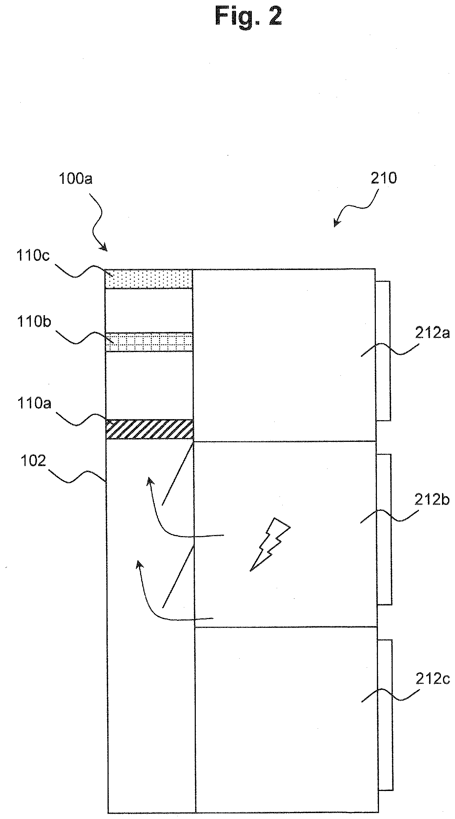

In Figur 1 links ist beispielhaft ein Störlichtbogen L eingezeichnet, der in an sich bekannter Weise die Umgebungsluft erhitzt beziehungsweise ionisiert. Infolge des Störlichtbogens L wird die Umgebungsluft ferner mit Verbrennungs- und Verdampfungsrückständen aus Metall und/oder anderen Materialien einer die Absorbereinrichtung 100 enthaltenen Schaltanlage (Fig. 2) angereichert. Die Absorbereinrichtung 100 verfügt erfindungsgemäß über mindestens zwei entlang einer Strömungsrichtung S hintereinander angeordnete Absorberelemente 110a, 110b, 110c. Beispielsweise stellt die Absorbereinrichtung 100 bzw. ihr Gehäuse bei ihrem Einbau in eine Mittelspannungsschaltanlage 200, vergleiche Figur 2, einen eine Fluidkommunikation zwischen einem Innenraum der Schaltanlage 200 und einer Umgebung ermöglichenden Druckkanal dar, so dass sich im Falle des Auftretens des Störlichtbogens L (Figur 1) eine Lichtbogengasbeziehungsweise Partikelströmung entlang der Strömungsrichtung S durch die Absorbereinrichtung 100 hindurch und damit aus dem Innenraum der Schaltanlage 200 heraus in die Umgebung der Schaltanlage 200, ergibt. Dadurch ist die Strömungsrichtung S definiert.

Erfindungsgemäß sind mindestens zwei Absorberelemente 110a, 110b bezüglich der Strömungsrichtung S hintereinander angeordnet. Vorliegend sind, wie aus Figur 1 ersichtlich, insgesamt drei Absorberelemente 110a, 110b, 110c in der Absorbereinrichtung 100 vorgesehen, mithin hintereinander geschaltet.

Weiter erfindungsgemäß weist mindestens ein in Bezug auf die Strömungsrichtung S stromabwärts angeordnetes Absorberelement 110b einen größeren Strömungswiderstand auf, als ein weiter stromaufwärts angeordnetes Absorberelement 110a. Dadurch ist vorteilhaft eine effizientere Reduktion von ausströmenden Heißgasen und glühenden Partikeln in die Umgebung der Schaltanlage 200 gewährleistet. Ferner ergibt sich vorteilhaft eine Reduzierung der Druckbelastung des die Schaltanlage 200 umgebenden Raums durch Vergrößerung des resultierenden Gesamtströmungswiderstands im Störlichtbogenfall.

Darüberhinaus kann durch die erfindungsgemäße Kaskadierung von mehreren Absorberelementen 110a, 110b, 110c in der Absorbereinrichtung 100 vorteilhaft auch bewirkt werden, dass eine geringere Druckbelastung im Bereich des Störlichtbogens L auftritt, weil die stromaufwärts gelegenen Absorberelemente 110a, 110b gleichermaßen einen Strömungswiderstand für reflektierte Gase beziehungsweise eine entsprechende Druckwelle in dem Innenraum der Absorbereinrichtung 100 darstellen.

Die Reduktion der von dem Lichtbogen L ausgehenden Heißgasbeziehungsweise Plasmaströmung ist in Figur 1 durch die Blockpfeile G1, G2, G3, G4 angedeutet. Das in einem Eingangsbereich 100a' der Absorbereinrichtung 100 angeordnete erste, das heißt stromaufwärts befindliche, Absorberelement 110a stellt einen ersten Strömungswiderstand für die Heißgasströmung G1 dar, so dass sich ausgangsseitig, das heißt stromabwärts, des ersten Absorberelements 110a bereits eine verminderte Heißgasströmung G2 gegenüber der ursprünglichen Heißgasströmung G1 ergibt. Die verminderte Heißgasströmung G2 wird durch das weitere Absorberelement 110b, das stromabwärts des ersten Absorberelements 110a angeordnet ist, weiter reduziert, wodurch sich eine weiter verminderte Heißgasströmung G3 ergibt. Nach dem Hindurchtreten der weiter reduzierten Heißgasströmung G3 durch das dritte Absorberelement 110c ergibt sich eine gegenüber der ursprünglichen Heißgasströmung G1 wesentlich reduzierte Heißgasströmung G4, die an einem Ausgang 100b' der Absorbereinrichtung 100 aus der Absorbereinrichtung 100 austritt. Insgesamt kann durch eine Steigerung des Strömungswiderstands der einzelnen Absorberelemente 110a, 110b, 110c entlang der Strömungsrichtung S eine besonders effiziente Reduktion der ausströmenden Heißgase und glühenden Partikel erzielt werden.

Des Weiteren ergibt sich vorteilhaft eine Reduzierung der Druckbelastung des Bereichs des Störlichtbogens L, weil die einzelnen Absorberelemente 110a, 110b, 110c auch für reflektierte Heißgase beziehungsweise entsprechende Druckwellen GR1, GR2, GR3 einen nichtverschwindenden Strömungswiderstand darstellen.

Bei einer besonders bevorzugten Ausführungsform weisen alle Absorberelemente, die weiter stromabwärts angeordnet sind als das eingangsseitig erste Absorberelement 110a, jeweils einen größeren Strömungswiderstand auf als das erste Absorberelement 110a, wodurch eine besonders effiziente Reduktion der Heißgasströmung gegeben ist.

Bei einer weiteren vorteilhaften Ausführungsform ist vorgesehen, dass jedes Absorberelement jeweils einen mindestens gleich großen, vorzugsweise jedoch größeren, Strömungswiderstand aufweist, als ein dem Absorberelement stromaufwärts benachbart angeordnetes Absorberelement.

Bei einer weiteren vorteilhaften Erfindungsvariante, bei der mindestens drei Absorberelemente vorgesehen sind, kann weiter vorgesehen sein, dass zwei zueinander benachbarte Absorberelemente jeweils einen im Wesentlichen gleich großen Strömungswiderstand aufweisen, wodurch die Anzahl an Gleichteilen innerhalb der erfindungsgemäßen Absorbereinrichtung gesteigert werden kann. Beispielsweise kann ein erstes Absorberelement einen ersten, verhältnismäßig geringen, Strömungswiderstand aufweisen, während zwei in Druckentlastungs- bzw. Strömungsrichtung S benachbarte, stromabwärts gelegene Absorberelemente einen größeren zweiten Strömungswiderstand aufweisen.

Bei einer weiteren vorteilhaften Ausführungsform ist vorgesehen, dass ein im Wesentlichen Zylinderform aufweisendes Gehäuse 102 zur Aufnahme der Absorberelemente vorgesehen ist. Das Gehäuse 102 definiert einen Druckkanal, in dem die einzelnen Absorberelemente 110a, 110b, 110c in Serie zueinander und mit aufeinander abgestimmten Strömungswiderständen angeordnet sind. Durch diesen Druckkanal 102 kann im Störlichtbogenfall ein Überdruck aus einem Innenraum eines die Absorbereinrichtung 100 aufweisenden Anlagengehäuses abgebaut werden, wobei das entsprechende Heißgas bzw. erhitzte Partikel sich im wesentlichen entlang der Strömungsrichtung S durch die Absorbereinrichtung 100 bewegen.

Bei noch einer weiteren vorteilhaften Ausführungsform ist vorgesehen, dass ein entlang der Strömungseinrichtung S gemessener Abstand d zwischen jeweils zwei zueinander benachbarten Absorberelementen für die Mehrzahl der Absorberelemente im Wesentlichen gleich ist. Unterschiedliche Abstände d zwischen benachbarten Absorberelementen sind ebenfalls denkbar.

Figur 2 zeigt einen Störlichtbogenfall in einem Schaltfeld 210, in dem in einem Schaltgeräteraum 212b ein Lichtbogen auftritt und Heißgas bzw. eine Plasmaströmung über sich infolge des Druckanstiegs in dem Schaltgeräteraum 212b öffnende Druckentlastungsklappen in die Absorbereinrichtung 100a einströmt. Durch die erfindungsgemäß kaskadierten Absorberelemente mit unterschiedlichem Strömungswiderstand werden die vorstehend bereits unter Bezugnahme auf Fig. 1 beschriebenen Vorteile erzielt.

Auch der an den Schaltgeräteraum 212b angrenzende Sammelschienenraum 212a und der Kabelanschlussraum 212c kann im Störlichtbogenfall in die Absorbereinrichtung 100a entlasten.

Da die Absorbereinrichtung 100a bei der vorliegenden Ausführungsform einem einzigen Schaltfeld 210 zugeordnet ist, kann sie individuell und spezifisch für das Schaltfeld 210 und seine Funktion, z.B. seinen maximalen Kurschlussstrom usw. ausgelegt sein. Dies kann durch entsprechende Auswahl der Anzahl der Absorberelemente und/oder ihre Abstände zueinander bzw. in dem Gehäuse und/oder ihren jeweiligen Strömungswiderstand erreicht werden.

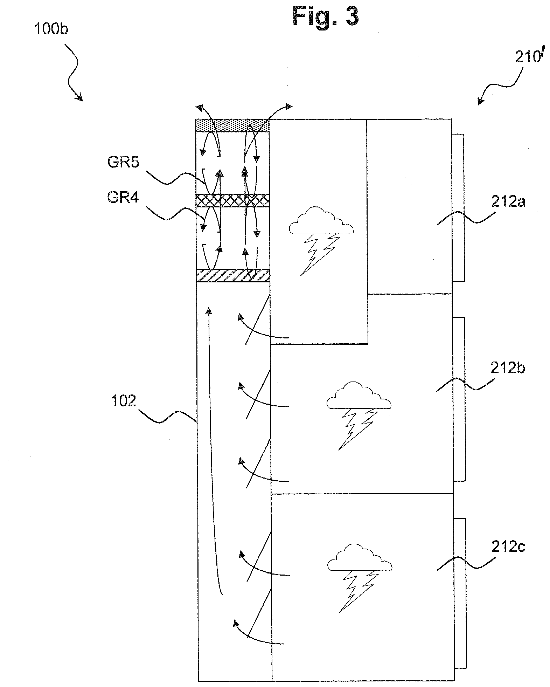

Figur 3 zeigt schematisch eine Seitenansicht eines Schaltfelds 210 gemäß einer weiteren Ausführungsform der Erfindung im Querschnitt. Das Schaltfeld 210' verfügt wiederum in dem Fachmann bekannter Weise

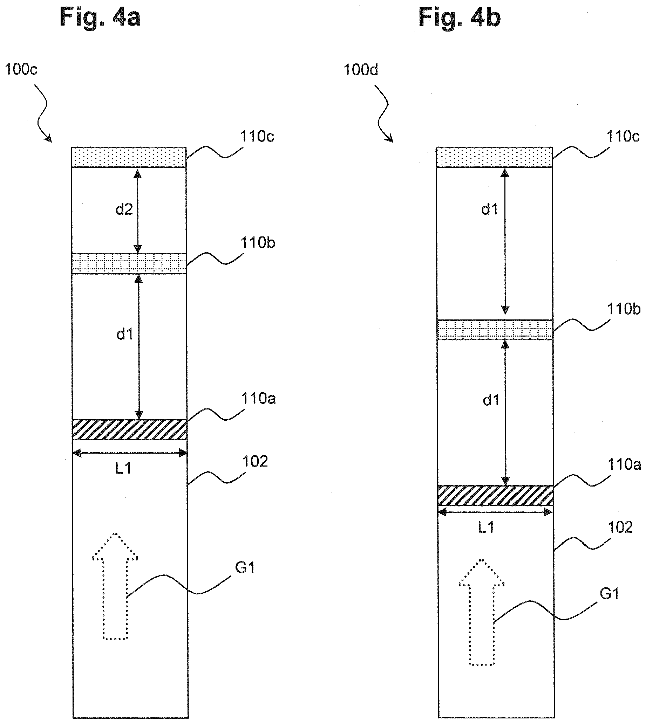

über einen Schaltgeräteraum 212b, einen Sammelschienenraum 212a und einen Kabelanschlussraum 212c, sowie erfindungsgemäß vorteilhaft über eine eigene Absorbereinrichtung 100b. Zusätzlich zu dem Betriebsszenario aus Fig. 3 sind in Fig. 4 die Plasmaströmungen in Strömungsrichtung und in Rückrichtung (durch Reflektion eines Teils der Plasmaströmung an einem stromabwärts liegenden Absorberelement) angedeutet, vgl. die Pfeile GR4, GR5.

Figur 4a zeigt eine weitere Ausführungsform eines erfindungsgemäßen Absorberelements 100c im Querschnitt. Bei dieser Ausführungsform ist ein Abstand d1 zwischen zwei benachbarten Absorberelementen 110a, 110b größer oder gleich etwa einer Quadratwurzel einer Querschnittsfläche mindestens eines der beiden benachbarten Absorberelemente.

Dies bedeutet, dass die Länge (in Strömungsrichtung) eines Entlastungsvolumens zwischen den zwei benachbarten Absorberelementen ein bestimmtes und einfach einstellbares Mindestmaß nicht unterschreitet.

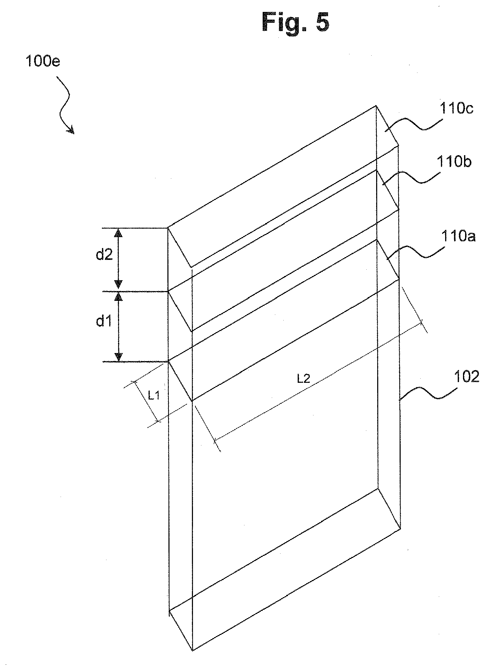

Beispielsweise weisen die in Figur 4a abgebildeten Absorberelemente 110a, 110b, 110c eine rechteckförmige Grundgeometrie mit einer kurzen Seite L1 und einer senkrecht zur Zeichenebene der Figur 5a verlaufenden langen Seite L2 (vgl. auch Fig. 5) auf. In diesem Fall gilt also für eine Querschnittsfläche A des Absorberelements 110a: A = L1 * L2.

Für den Abstand d1 zu dem benachbarten Absorberelement 110b gilt der vorliegenden Ausführungsform zufolge dann: $d1 \geq \sqrt{L1 * L2}$ bzw. $d1 \geq \sqrt{A}$.

Eine geringfügige Unterschreitung des Mindestabstands d1 z.B. um einige Prozent ist ebenfalls denkbar.

Die vorstehende Dimensionierung bewirkt vorteilhaft, dass die im Lichtbogenfall auftretenden strömenden Gase und eine zugehörige Druckwelle

A) stufenweise gebremst und gekühlt werden und
B) zwischen den Absorbern 110a, 110b, 110c durch Reflexion gedämpft werden (schleifenartige Reflektionen an benachbarten Absorbern in und gegen Strömungsrichtung S (Fig. 1)).

Erfindungsgemäß ist erkannt worden, dass die Vorsehung von mehreren Absorberelementen 110a, 110b, 110c in Serie unter gleichzeitiger Abstimmung ihrer Strömungswiderstände aufeinander zu einer gesteigerten Wirksamkeit der Absorbereinrichtung 100c führt und gleichzeitig abgestimmt bzw. eingestellt werden kann auf die maximal zulässige Druckbelastung des Gehäuses (Ort, in dem der maximale Überdruck bei einem Störlichtbogen entsteht).

Abgestimmt bzw. eingestellt bedeutet, dass die Auslegung der Strömungswiderstände (Aufbau der Absorberelemente 110a, 110b, 110c mit bestimmter effektiver Durchlassfläche, bestimmter Staufläche und bestimmter Kühlmasse) sowohl das Bersten des Fehlerraums als auch das Entstehen eines unzulässig hohen Überdrucks und Entweichen von heißen Gasen und glühenden Partikeln verhindert.

Ein zweiter Abstand d2 zwischen dem in Strömungsrichtung der Figur 4a zweiten und dritten Absorberelement 110c, 110d ist geringer gewählt als der erste Abstand d1.

Figur 4b zeigt eine weitere Ausführungsform eines erfindungsgemäßen Absorberelements 100d im Querschnitt. Der Abstand d1 zwischen allen drei Absorberelementen 110a, 110b, 110c ist gleich groß, wobei gilt d1 > L1.

Figur 5 zeigt perspektivisch eine weitere Ausführungsform einer erfindungsgemäßen Absorbereinrichtung 100e mit drei rechteckförmigen Absorberelementen 110a, 110b, 110c, die untereinander die Abstände d1, d2 aufweisen. Die Absorberelemente 110a, 110b, 110c weisen eine Breite L1 und eine Länge L2 auf. Wie bereits unter Bezugnahme auf Fig. 4a beschrieben, gilt auch bei Figur 5 für den Abstand d1 zwischen den benachbarten Absorberelementen 110a, 110b:

$$d1 \geq \sqrt{L1 * L2} \quad \text{bzw.} \quad d1 \geq \sqrt{A}$$

Dies bedeutet, dass die Länge d1 (in Strömungsrichtung) eines Entlastungsvolumens zwischen den zwei benachbarten Absorberelementen 110a, 110b ein bestimmtes und einfach einstellbares Mindestmaß nicht unterschreitet.

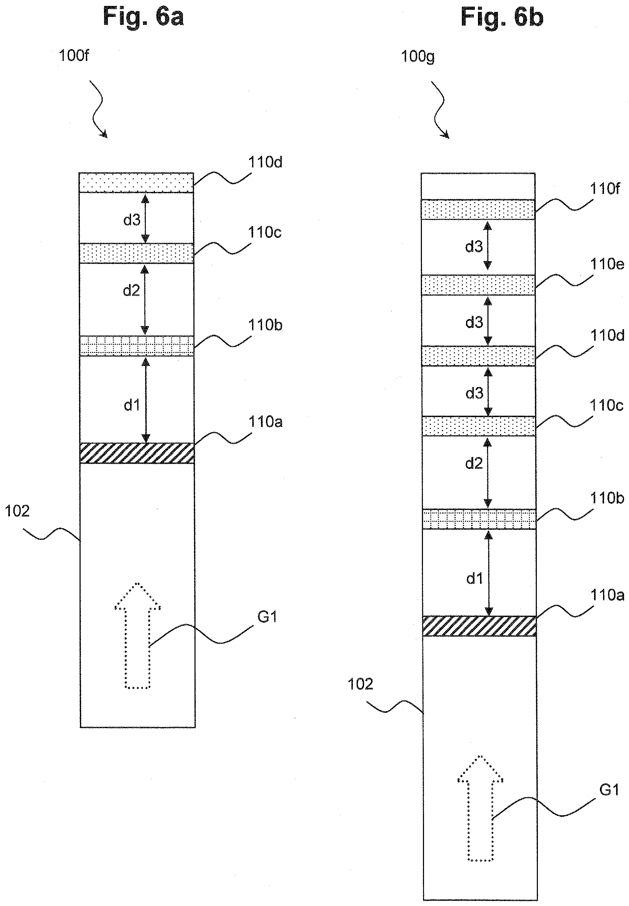

Figur 6a zeigt eine weitere Ausführungsform eines erfindungsgemäßen Absorberelements 100f im Querschnitt. Im Unterschied zu den vorstehend beschriebenen Konfigurationen sind vorliegend vier Absorberelemente 110a, .., 110d vorgesehen, die jeweils unterschiedlich zueinander beabstandet sind, vgl. die Bezugszeichen d1, d2, d3. Ergänzend weisen alle vier Absorberelemente 110a, .., 110d einen entlang der Druckentlastungsrichtung (in Fig. 6a vertikal nach oben) zunehmenden Strömungswiderstand auf.

Figur 6b zeigt eine weitere Ausführungsform eines erfindungsgemäßen Absorberelements 100g mit insgesamt sechs Absorberelementen 110a, .., 110f in teilweisem Querschnitt. Die in Druckentlastungsrichtung ersten beiden Absorberelemente 110a, 110b sind mit d1, d2 wie ersichtlich zueinander beabstandet, während die nachfolgenden weiteren Absorberelemente 110c, 110d, 110e, 110e in etwa den gleichen Abstand d3 zueinander haben.

Das erste Absorberelement 110a weist einen ersten, kleinsten Strömungswiderstand auf, und das zweite Absorberelement 110b einen etwas größeren zweiten Strömungswiderstand. Die restlichen Absorberelemente 110c, .., 110f weisen denselben dritten Strömungswiderstand auf, der größer ist als der zweite Strömungswiderstand des Absorberelements 110b.

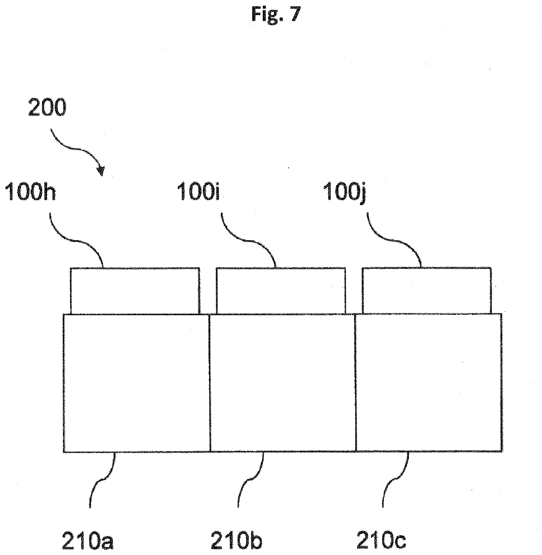

Figur 7 zeigt schematisch eine Draufsicht auf eine drei Schaltfelder 210a, 210b, 210c aufweisende Schaltanlage 200 gemäß einer weiteren Ausführungsform. Jedem Schaltfeld 210a, 210b, 210c ist eine eigene Absorbereinrichtung 100h, 100i, 100j zugeordnet, die individuell auf das betreffende Schaltfeld 210a, 210b, 210c ausgelegt ist. Dies kann z.B. die Nennleistung bzw. Kurzschlussleistung und/oder die Zahl und/oder Anordnung der Absorberelemente, deren Strömungswiderstände, effektive Durchlassflächen, Staufläche und/oder Kühlmassen betreffen. Dadurch kann jedes Schaltfeld mit einer eigens optimierten Absorbereinrichtung betrieben werden und muss überdies nicht an einen Sammelkanal angeschlossen werden.

**Patentansprüche**

1. Absorbereinrichtung (100) für ein Schaltfeld (210) einer Mittelspannungsschaltanlage (200), wobei mindestens zwei Absorberelemente (110a, 110b) bezüglich einer Strömungsrichtung (S) hintereinander angeordnet sind, und wobei mindestens ein in Bezug auf die Strömungsrichtung (S) stromabwärts angeordnetes Absorberelement (110b) einen größeren Strömungswiderstand aufweist, als ein weiter stromaufwärts angeordnetes Absorberelement (110a), wobei der Strömungswiderstand des jeweiligen Absorberelements (110a, 110b) durch einen Aufbau des Absorberelements (110a, 110b) mit bestimmter effektiver Durchlassfläche einstellbar ist, wobei ein Abstand (d1) zwischen zwei benachbarten Absorberelementen (110a, 110b) größer oder gleich etwa einer Quadratwurzel einer Querschnittsfläche mindestens eines der beiden benachbarten Absorberelemente (110a, 110b) ist.

2. Absorbereinrichtung (100) nach Anspruch 1, wobei alle Absorberelemente (110b, 110c), die weiter stromabwärts angeordnet sind als ein eingangsseitig angeordnetes erstes Absorberelement (110a), jeweils einen größeren Strömungswiderstand aufweisen als das erste Absorberelement (110a).

3. Absorbereinrichtung (100) nach einem der vorstehenden Ansprüche, wobei jedes Absorberelement (110b, 110c) jeweils einen größeren Strömungswiderstand aufweist als ein dem Absorberelement (110b, 110c) stromaufwärts benachbart angeordnetes Absorberelement (110a, 110b).

4. Absorbereinrichtung (100) nach einem der vorstehenden Ansprüche, wobei mindestens drei Absorberelemente (110a, 110b, 110c, 110d) vorgesehen sind und wobei mindestens zwei zueinander benachbarte Absorberelemente (110c, 110d) jeweils einen im wesentlichen gleich großen Strömungswiderstand aufweisen.

5. Absorbereinrichtung (100) nach einem der vorstehenden Ansprüche, wobei ein Druckkanal (102) zur Aufnahme der Absorberelemente (110a, 110b, 110c) vorgesehen ist.

6. Schaltfeld (210, 210a, 210b, 210c), insbesondere einer Mittelspannungsschaltanlage (200), mit mindestens einer Absorbereinrichtung (100) nach einem der vorstehenden Ansprüche.

7. Schaltanlage (200), insbesondere Mittelspannungsschaltanlage (200), mit mindestens einer Absorbereinrichtung (100) nach einem der Ansprüche 1 bis 5.

8. Schaltanlage (200) nach Anspruch 7, wobei die Schaltanlage (200) mindestens zwei Schaltfelder (210a, 210b) aufweist, und wobei jedem der Schaltfelder (210a, 210b) eine eigene Absorbereinrichtung (100h, 100i, 100j) nach einem der Ansprüche 1 bis 5 zugeordnet ist.

9. Schaltanlage (200) nach Anspruch 8, wobei eine einem ersten Schaltfeld (210a) zugeordnete erste Absorbereinrichtung (100h) eine erste Anzahl und/oder Anordnung und/oder Konfiguration von Absorberelementen (110a, 110b, 110c) aufweist, und wobei eine einem zweiten Schaltfeld (210b) zugeordnete zweite Absorbereinrichtung (100i) eine zweite Anzahl und/oder Anordnung und/oder Konfiguration von Absorberelementen (110a, 110b, 110c) aufweist, die verschieden ist von der ersten Anzahl und/oder Anordnung und/oder Konfiguration.

**Claims**

1. Absorber device (100) for a switch panel (210) of a medium voltage switchgear (200), wherein at least two absorber elements (110a, 110b) are arranged in succession in relation to a direction of flow (S), and wherein at least one absorber element (110b) arranged downstream in relation to the direction of flow (S) has a greater flow resistance than an absorber element (110a) arranged further upstream, wherein the flow resistance of the respective absorber element (110a, 110b) can be adjusted through a structure of the absorber element (110a, 110b) with a particular effective throughflow area, wherein a distance (d1) between two adjacent absorber elements (110a, 110b) is greater than or equal to for example a square root of a cross-sectional area of at least one of the two adjacent absorber elements (110a, 110b).

2. Absorber device (100) according to claim 1, wherein all absorber elements (110b, 110c) which are arranged further downstream than a first absorber element (110a) arranged on the input side in each case have a greater flow resistance than the first absorber element (110a).

3. Absorber device (100) according to one of the preceding claims, wherein each absorber element (110b, 110c) in each case has a greater flow resistance than an absorber element (110a, 110b) arranged upstream adjacent said absorber element (110b, 110c).

4. Absorber device (100) according to one of the preceding claims, wherein at least three absorber elements (110a, 110b, 110c, 110d) are provided and wherein at least two absorber elements (110c, 110d) adjacent one another in each case have a substantially equally high flow resistance.

5. Absorber device (100) according to one of the preceding claims, wherein a pressure channel (102) is provided to receive the absorber elements (110a, 110b, 110c).

6. Switch panel (210, 210a, 210b, 210c), in particular of a medium voltage switchgear (200), with at least one absorber device (100) according to one of the preceding claims.

7. Switchgear (200), in particular medium voltage switchgear (200), with at least one absorber device (100) according to one of the claims 1 to 5.

8. Switchgear (200) according to claim 7, wherein the switchgear (200) has at least two switch panels (210a, 210b), and wherein each of the switch panels (210a, 210b) is provided with its own absorber device (100h, 100i, 100j) according to one of the claims 1 to 5.

9. Switchgear (200) according to claim 8, wherein a first absorber device (100h) assigned to a first switch panel (210a) has a first number and/or arrangement and/or configuration of absorber elements (110a, 110b, 110c), and wherein a second absorber device (100i) assigned to a second switch panel (210b) has a second number and/or arrangement and/or configuration of absorber elements (110a, 110b, 110c) which is different from the first number and/or arrangement and/or configuration.

**Revendications**

1. Dispositif d'absorption (100) pour un panneau de commutation (210) d'une installation de commutation moyenne tension (200), dans lequel au moins deux éléments absorbants (110a, 110b) sont disposés l'un derrière l'autre par rapport à une direction de flux (S), et dans lequel au moins un élément absorbant (110b) agencé en aval par rapport à la direction de découlement (S) a une résistance à l'écoulement supérieure à celle d'un élément absorbant agencé en amont (110a), dans lequel la résistance à l'écoulement des éléments absorbants respectifs (110a, 110b) est réglée par une mise en oeuvre de l'élément absorbant (110a, 110b), avec une surface de transmission effective déterminée, dans lequel une distance (dl) entre deux éléments absorbants adjacents (110a, 110b) est supérieure ou égale à environ une racine carrée d'une aire de section transversale d'au moins un des deux éléments absorbants adjacents (110a, 110b).

2. Dispositif d'absorption (100) selon la revendication 1, dans lequel tous les éléments absorbants (110b, 110c), qui sont agencés plus en aval qu'un premier élément absorbant (110a) agencé du côté d'entrée, ont chacun une résistance à l'écoulement supérieure à celle du premier élément absorbant (110a).

3. Dispositif d'absorption (100) selon l'une quelconque des revendications précédentes, dans lequel chaque élément absorbant (110b, 110c) présente une résistance à l'écoulement supérieure à celle d'un élément absorbant (110a, 110b) agencé en amont de l'élément absorbant (110b, 110c) .

**4.** Dispositif d'absorption (100) selon l'une quelconque des revendications précédentes, dans lequel au moins trois éléments absorbants (110a, 110b, 110c, 110d) sont prévus, et dans lequel au moins deux éléments absorbants mutuellement adjacents (110c, 110d) présentent chacun une résistance à l'écoulement sensiblement égale.

**5.** Dispositif d'absorption (100) selon l'une quelconque des revendications précédentes, dans lequel un canal de pression (102) destiné à recevoir les éléments absorbants (110a, 110b, 110c) est prévu.

**6.** Panneau de commutation (210, 210a, 210b, 210c), en particulier une installation de commutation moyenne tension (200), avec au moins un dispositif d'absorption (100) selon l'une des revendications précédentes.

**7.** Installation de commutation (200), en particulier installation de commutation moyenne tension (200), avec au moins un dispositif d'absorption (100) selon l'une des revendications 1 à 5.

**8.** Installation de commutation (200) selon la revendication 7, dans laquelle l'installation de commutation (200) comporte au moins deux panneaux de commutation (210a, 210b) et dans laquelle chacun des panneaux de commutation (210a, 210b) a un dispositif d'absorption individuel (100h, 100i, 100j) selon l'une des revendications. 1 à 5 qui lui est associé.

**9.** Installation de commutation (200) selon la revendication 8, dans laquelle un premier dispositif d'absorption (100h) associé à un premier panneau de commutation (210a) présente un premier nombre et/ou une première disposition et/ou une première configuration d'éléments absorbants (110a, 110b, 110c), et dans laquelle un second dispositif d'absorption (100i) associé à un second dispositif de commutation (210b) présente un second nombre et/ou un second agencement et/ou une seconde configuration d'éléments absorbants (110a, 110b, 110c) différent(e)(s) du premier nombre et/ou du premier agencement et/ou de la première configuration.

Fig. 1

# Fig. 2

## Fig. 3

100b · 210' · GR5 · GR4 · 212a · 212b · 102 · 212c

# Fig. 4a

# Fig. 4b

## Fig. 5

# Fig. 6a

100f

110d

d3

110c

d2

110b

d1

110a

102

G1

# Fig. 6b

100g

110f

d3

110e

d3

110d

d3

110c

d2

110b

d1

110a

102

G1

Fig. 7

200

100h    100i    100j

210a    210b    210c

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1450458 A1